# EUROPEAN PATENT SPECIFICATION

(11) **EP 3 762 205 B1**
(45) Date of publication and mention of the grant of the patent: **07.08.2024**
(21) Application number: 19722218.5
(22) Date of filing: 07.03.2019
(51) Int. Cl.: B29C 45/14, B65D 85/804, B29L 31/00

(54) **METHOD OF MANUFACTURING CAPSULES FOR CONTAINING A SUBSTANCE FROM WHICH A BEVERAGE CAN BE PRODUCED AND SUCH CAPSULES THEMSELVES**
VERFAHREN ZUR HERSTELLUNG VON KAPSELN ZUR AUFNAHME EINER SUBSTANZ, AUS DER EIN GETRÄNK HERGESTELLT WERDEN KANN, UND SOLCHE KAPSELN
PROCÉDÉ DE FABRICATION DE CAPSULES DESTINÉES À CONTENIR UNE SUBSTANCE À PARTIR DE LAQUELLE UNE BOISSON PEUT ÊTRE PRODUITE ET DE TELLES CAPSULES ELLES-MÊMES

(30) Priority: 07.03.2018 ZA 201801562
(43) Date of publication of application: 13.01.2021
(73) Proprietor: Euro-Caps Holding B.V., 3044 CE Rotterdam (NL)
(72) Inventor: HELD, Micha Alexander, 3044 CE Rotterdam (NL); KAY, Anthony, 8005 Cape Town (ZA)
(74) Representative: EP&C
(86) International application number: PCT/NL2019/050143
(87) International publication number: WO 2019/172758

(56) References cited:
- EP-A1- 2 236 264
- AT-B- 347 225

## Description

### FIELD OF THE INVENTION

This invention relates to a method of manufacturing a capsule for containing a substance from which a beverage can be produced, and to such a capsule itself.

### BACKGROUND TO THE INVENTION

The coffee capsule industry manufactures capsules which are of aluminium foil and also manufactures capsules which are of moulded synthetic plastics material. Aluminium foil is both attractive in appearance, being shiny and bright, and is oxygen and moisture impervious.

Synthetic plastics material on the other hand, whilst having a smooth "polished" surface, cannot match foil in appearance. Also, the wall thickness and the plastics material used must be such as to provide the necessary oxygen barrier. Oxygen ingress results in the substance in the capsule becoming stale. This applies particularly to coffee.

EP-2744730-B1 discloses a capsule comprising an injection moulded capsule body having a frusto-conical side wall, a base wall with a dispensing opening, and a circumferential step directed inwardly between the base wall and side wall. The outside surface of the side wall and the step are covered by a gas impermeable label that is permanently attached to the capsule body by in-mould labelling. This label initially has a flat arc-shape with an inner curved edge, an outer curved edge parallel to the inner curved edge, and two side edges connecting both curved edges. The inner curved edge has a smaller radius than the outer curved edge.

During manufacturing, the inner curved edge of the label first needs to be provided with a large number of fringes. It is stated that without these fringes, undesirable gas and/or moisture permeable creases would arise at the location of the step.

During manufacturing, the label subsequently needs to get shaped out of its initially flat arc-shape into a three-dimensional shape that mainly corresponds to the aimed frusto-conical shape for the capsule. A the location of the aimed step, the fringes need to be individually bend inwards. To aid this bending inwards during insertion in the mould, an additional punching step is applied to pre-bend the fringes slightly inward.

A disadvantage of this in-mould labelled capsule body of EP-2744730-B1 is that its manufacturing process leaves to be desired cq improved. It includes some manufacturing stages that are relative difficult to handle, that requires additional handlings and/or actions, and that may negatively influence the quality of the end product, in particular the oxygen barrier function thereof. Furthermore it is disadvantageous that its technique is only usable for a limited number of capsule types, that is to say ones comprising a step between their side and base walls.

Another disadvantage of EP-2744730-B1 is that due to the use of the specific initially flat arc-shape with fringes, it is difficult to cover a relative large dimensioned step. Inward folding of the fringes from a frusto-conical circumferential side wall then is likely to cause too big problems with material accumulation due to rapidly increasing overlaps between adjacent fringes. To counter this, an additional cutting step would be required to remove excess material from between the fringes of the label. Because of this it does not seem possible to use this known technique for having an entire base wall of a capsule body covered with overlapping fringes.

Another disadvantage of EP-2744730-B1 is that with its technique of using fringes it is not possible to reliably have a dispensing opening sealed by means of overlapping fringes when such a dispensing opening is foreseen in a base wall of the capsule body. When using the label and method as disclosed in EP-2744730-B1 therefore, an additional distinctive gas impermeable bottom membrane is required that needs to be attached to the step on an inside of the capsule body, and that must be dimensioned such that it has an overlap with the overlapping fringes of the in-moulded label on the outside of the step. Otherwise it cannot be guaranteed that no gas or moisture will pass through the capsule body walls at that location.

Furthermore, it is noted that the additional punching step for pre-bending of the fringes makes the method more complex, time-consuming and less cost efficient.

AT-347 225 discloses a method for manufacturing a holder where s sheet of flexible material that comprises a circular base plate and two arc-shaped side plates integrally connected thereto is folded and manipulated into a truncated cone-shaped container with a base wall and a circumferential side wall. For this the sheet 1 is positioned inside a hollow female mould portion 6, after which a male mould portion 4, 5 gets positioned against it. Subsequently, adjacent free edge parts of the base plate 2 and the side plates 3 get connected with each other with injection moulding material. For that, the injection moulding material gets injected at the locations of the adjacent free edge parts of the sheet 1 into the injection mould.

EP-2 236 264 shows a capsule that comprises an injection moulded support skeleton with an upper and lower rim and bottom portion and with windows formed in its circumferential side wall. An in-mould label is sealed by means of in-mould labelling against the skeleton such that at the least the windows are closed.

The present invention aims to at least partly overcome these disadvantages or to provide a usable alternative. In particular the invention aims to provide a method for cost effectively producing a capsule that is commercially attractive for application to various capsule platforms, having a combination of a capsule body of synthetic plastics material with an in-moulded label that has an oxygen barrier function and that can easily be given an attractive outer appearance. More in particular, the present invention aims to provide a capsule of synthetic plastics material which has the appearance and oxygen permeability of a foil capsule.

### BRIEF DESCRIPTION OF THE INVENTION

According to the invention, this aim is achieved by means of the method according to claim 1. This method of manufacturing a capsule for containing a substance from which a beverage can be produced, comprises using an in-mould labelling technique to unite a label with a capsule body of synthetic plastics material so that the label covers at least part of a base wall of the capsule body and at least part of a side wall of the capsule body. According to the inventive thought, the label, in a flat starting shape of the label, comprises a disc and one or more sections joined to the periphery of the disc, wherein the label is inserted into a mould and the one or more sections are folded up relative to the disc and manipulated to a curved form of the side walls, such that the disc covers at least said part of the base wall and the one or more sections cover at least said part of the side wall. The layer of synthetic plastics material is moulded onto the label bonding the label to the injection moulded capsule body.

Thus advantageously a cost- and time-saving efficient capsule production method is provided that can be used for all kinds of capsule platforms. Owing to the provision of the one singular label assembly of the disc and the one or more sections integrally joined with the disc, a number of important advantages can be achieved.

For example, the inventive manufacturing process now is both usable for capsule types that comprise a smaller or larger step between their side and base walls. This can easily be done by providing a larger or smaller central hole inside the disc such that it obtains a ring-shape that corresponds to the smaller or larger step.

The manufacturing process however can also be used for capsule types without such a step, that is to say ones of which the base wall directly merges into the side wall.

It has even become possible to have an entire base wall of the capsule body reliably and sealingly covered with the disc of the label. This can easily be done by not providing any hole inside the disc such that it obtains a fully closed-shape that is well able to cover the entire base wall. It is then also possible to have the disc reliably seal a dispensing opening when provided in such a base wall of the capsule body. Having to provide a distinctive additional gas impermeable bottom membrane on an inside of the capsule body then is no longer required.

An advantage of having the label comprise a ring- or closed-shape disc is that it can easily cover a part or even the whole base wall of the capsule body without requiring additional steps of having to provide fringes in combination with a pre-bending step or in combination with having to remove excess material from out of between such fringes. This makes the production process more cost efficient and environmentally friendly. When applied to capsules without a spigot or other type of protrusion extending outwardly from the base wall, there also no longer is a need for an additional internal gas barrier membrane. This further adds to the cost efficiency and environmentally friendliness of the invention.

An advantage of having the label comprise one or more sections that are integrally joined to the periphery of the disc and folded upwards relative to the disc, is that it is relatively robust and makes it possible to have the label formed into its aimed three-dimensional capsule body shape in one go inside a mould. During folding up and manipulating into the curved form of the one or more sections of the originally flat label, the folding/forming of the one or more sections and insertion forces are well able to cooperate with each other. This aids the folding up/manipulating into the curved form process and does not have to require an additional step, making the method more cost efficient.

It is noted that the in-mould labelling (IML) is a technique that here is used in combination with the injection moulding of the capsule bodies. As a first step the label is folded up/manipulated into the curved form and inserted into the mould. The label for example can be formed directly inside and against a female hollow mould cavity or around a male mould core or some kind of intermediary element, having a shape corresponding to that of the to be injection moulded capsule body. After insertion, the label can be held in place by vacuum or other suitable positioning means. The male mould core or intermediary element can be given a positive shape relative to the corresponding female hollow mould cavity such that after the label has been placed, a space is left free for injection moulding the capsule body. For that the mould is closed and molten plastic resin for forming the capsule body is introduced into the mould. Due to elevated temperatures in the mould during this processing, the label is well able to bond to the injection moulded capsule body, for example by having a layer of the label that is compatible with the to be injection moulded plastic material melt and/or get activated to bond to the solidifying material of the capsule body.

In an embodiment, the one or more sections joined to the periphery of the disc may have a plurality of sections, in particular an even number at diametrically opposed locations, and more in particular two sections at such diametrically opposed locations. An advantage of this is that this makes the sections easier to fold up and manipulate in the curved form. The sections can be made shorter with respect to the situation wherein there is only a single section that is to cover the entire side wall of the capsule body. This helps the sections to get correctly placed during folding, thereby adding to the robustness and cost efficiency of the method. Another important advantage of this is that the method now can be performed such that the distinctive folding and manipulation forces are all directed towards a same center axis of the to be formed capsule body shape, and thus help to keep the formed three-dimensional label correctly positioned relative to the mould during its simultaneous or subsequent insertion therein. This symmetry of forces further adds to the efficiency of the method and to the quality of the end product.

In an embodiment, each of the one or more sections may have an inner edge, a centre of which is joined to the disc. The important advantage of this is that the method now can be performed such that the distinctive manipulation forces for each section can be kept symmetrical relative to its centre joint with the disc. This helps to have each section obtain its foreseen curved shape in a correct manner and to keep the formed three-dimensional label correctly positioned relative to the mould during its simultaneous or subsequent insertion therein. This symmetry of forces also adds to the efficiency of the method and to the quality of the end product.

Each of the sections, in the flat starting shape of the label, can be provided with straight inner, outer and side edges such that together they are designed to be manipulated in a cylindrical shaped side wall of a capsule body. Preferably however each of the sections may have a curved inner edge and a curved outer edge parallel to the inner edge, the outer edge being longer than the inner edge and there being diverging side edges which join the ends of the inner and outer edges. An advantage of having such smaller and larger inner and outer curved edges together with diverging side edges, is that after folding and manipulation, a three dimensional frusto-conical shape automatically gets obtained for the side wall. This is a main shape of capsules in the present market and therefore this feature would add to the commercial viability of the invention.

According to the invention, the disc is dimensioned larger than the base wall, and a peripheral edge of the disc is then folded up and manipulated to the curved form of the side wall such that the peripheral edge of the disc comes to extend beyond an inner edge of the one or more sections folded up and manipulated to the curved form of the side wall, creating an overlap between the peripheral edge of the disc and the inner edge of the sections. An advantage of having this overlap between the peripheral edge of the disc and the inner edge of the sections, is that it adds to the reliability of the barrier properties of the capsule. Portions of the inner edge(s) of the sections that, in the flat starting shape of the label, are not integrally joined to the disc now are adequately covered by excess material of the disc. Owing to the fact that it is the peripheral edge of the disc that needs to get folded up and manipulated into the curved shape in order to create the overlap with circumferential side wall sections, this folding up and manipulating in the curved shape of the peripheral edge of the disc can advantageously be combined with a simultaneous insertion of the label into the mould. No pre-bending step is needed for that.

In addition to the above, the abovementioned overlap preferably may come to lie between 0.1 and 2.5 mm. An advantage of such a relative small dimensioned overlap is that the aimed guarantee of the barrier properties may already be achieved at that overlapping location of the inner edge of the side wall without this being able to compromise the efficiency of the manufacturing process. A having to provide edges of the sections and/or disc with fringes or the like is not needed for this. Also the outer appearance of the capsule at that overlapping location of the inner edge of the side wall shall not be compromised by it.

In an embodiment the label is provided with one or more incisions extending inwardly from the peripheral edge of the disc at a location of where the one or more sections join to the periphery of the disc. An advantage of these incisions is that it could improve the efficiency of the label folding process in certain embodiments of the capsule and label. During folding of the section upwards relative to the disc, the incisions could improve the reliability of a folding line between said disc and sections. During manipulating of the label to curved form. The incisions can for example be made during punching of the label out of a sheet of label material.

In an embodiment, the one or more sections can be dimensioned larger than the side wall, and wherein the one or more sections are folded up and manipulated to the curved form of the side wall such that adjacent side edges of the one or more sections come to extend beyond each other creating an overlap between them. An advantage of having an overlap between the adjacent ones of the side edges of the one or more sections, is that similar to the overlap between the disc and the sections, it adds to the reliability of the barrier properties of the capsule. The overlap makes it possible to guarantee that the entire side wall of the capsule body gets completely covered by the label, even in a case of small process variations.

In an embodiment, the label may have a laminated construction that comprises an oxygen barrier, in particular an aluminium foil, laminated to a film of synthetic plastics material. An advantage of such a laminated construction is that it may provide flexibility with respect to material properties of the label. This facilitates applying other synthetic plastics materials or laminate layers that may be better suited for preserving the properties of certain substances to be stored and kept fresh inside the capsule body or may be more cost effective in certain processes. An advantage of having an oxygen barrier comprised by said laminated construction is that it makes longer storing of the capsules possible without degrading the contained substance. Aluminium herein is specifically suited as it has proven oxygen and moisture barrier properties.

In a further embodiment, during the moulding of the layer of synthetic plastics material onto the label, bonding the label to the injection moulded capsule body, furthermore a connecting with each other of the respective edges at the overlap may take place by means of the film of synthetic plastics material of the label itself. This can for example be obtained by means of fusion welding. An advantage of having the film of plastics material of the label itself provide the connection while being in the mould, is that no additional step is required for obtaining the overlap connection(s) preceding. This can all be achieved during the IML itself. This also adds to the cost efficiency and environmental friendliness of the method as no adhesives or other connection means are required.

The invention also relates to a capsule according to any one of claims 8-13, in particular to be manufactured by any of the preceding method claims.

According to one aspect of the present invention there can be provided a capsule for containing a substance from which a beverage can be produced, the capsule comprising a body of synthetic plastics material and an aluminium foil label which has been united with the body by in mould labelling, the body having a frustoconical side wall and a transverse base wall at the smaller diameter end of the side wall, the label covering the base wall and side wall of the body.

There can be an outwardly protruding flange encircling the body at its larger diameter end, one circumferentially extending edge of the label being adjacent the flange.

According to a further aspect of the present invention there can be provided a method of manufacturing a capsule for containing a substance from which a beverage can be produced, the method comprising using the in-mould labelling technique to unite an aluminium foil label with a capsule body of synthetic plastics material so that the label covers a base wall of the capsule body and a frustoconical side wall of the capsule body.

According to another aspect of the present invention there can be provided an aluminium foil label to be united with a moulded body of synthetic plastics material by the in-mould labelling technique, the label comprising a disc and arcuate sections joined to the periphery of the disc at diametrically opposed locations, each section having a curved inner edge the centre of which is joined to the disc and a curved outer edge parallel to the inner edge, the outer edge being longer than the inner edge and there being diverging side edges which join the ends of the inner and outer edges.

Further preferred embodiments of the method and capsule are stated in the subclaims.

### BRIEF DESCRIPTION OF THE DRAWINGS

For a better understanding of the present invention, and to show how the same may be carried into effect, reference will now be made, by way of example, to the accompanying drawings in which:
Figure 1 is a top plan view of a capsule body;
Figure 2 is a diametrical section through the capsule body of Figure 1;
Figure 3 is a diagrammatic pictorial view of the base of the capsule body of Figures 1 and 2;
Figure 4 is a plan view of a label for the capsule body;
Figure 5 is an "exploded" pictorial view of a capsule for containing a substance from which a beverage can be extracted;
Figure 6a represents in a schematic way, a cross-sectional view of an embodiment of a capsule, provided with an in-moulded label. Figure 6b depicts a plan view of a label for the capsule body depicted in figure 6a;
Figure 7a represents in a schematic way, a cross-sectional view of another embodiment of a capsule, provided with an in-moulded label. Figure 7b depicts a plan view of a label for the capsule body depicted in figure 7a;
Figure 8a represents in a schematic way, a cross-sectional view of another embodiment of a capsule, provided with an in-moulded label. Figure 8b depicts a plan view of a label for the capsule body depicted in figure 8a;
Figure 9a-d represent in a schematic way, in perspective view, an embodiment of the label in different stages of the folding process. Figure 9a shows the label in flat form. Figure 9b shows the label wherein a section of the label is slightly folded upwards. Figure 9c shows the label wherein the section is folded upwards. Figure 9d shows the section of the label manipulated to curved form;
Figure 10a shows a plan view of a label wherein the material that is aimed to form the overlap is indicated, according to an embodiment of the invention. Figure 10b shows a detailed view of figure 10a. Figure 10c represent in a schematic way, in detailed view, the overlap between the disc and a section of an embodiment of the label. Figure 10d shows the overlap between edges of one or more sections according to an embodiment of the label; and
Figure 11 represents in a schematic way, a cross section of an embodiment of label material.

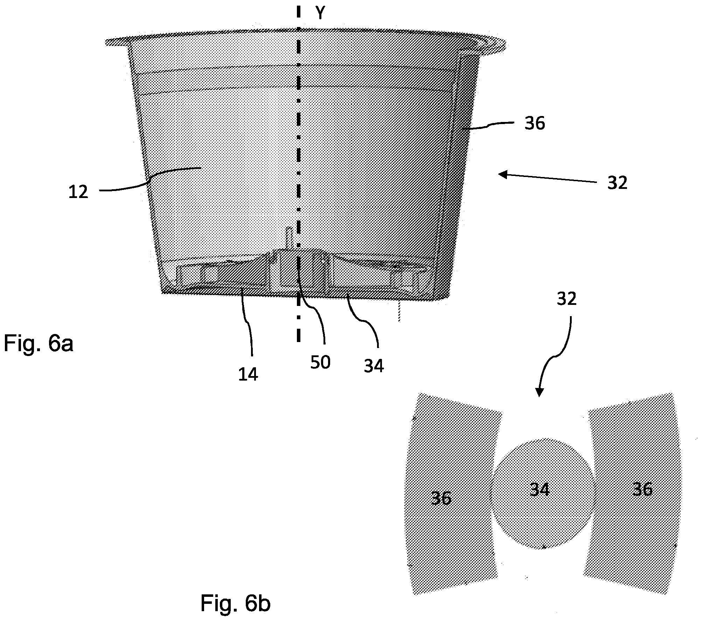

The embodiments depicted in Figures 6a - 9d are not covered by the subject-matter of the claims.

### DETAILED DESCRIPTION OF THE DRAWINGS

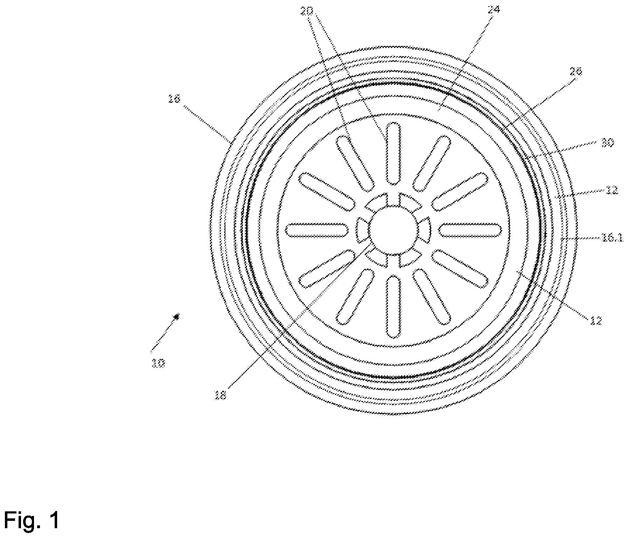

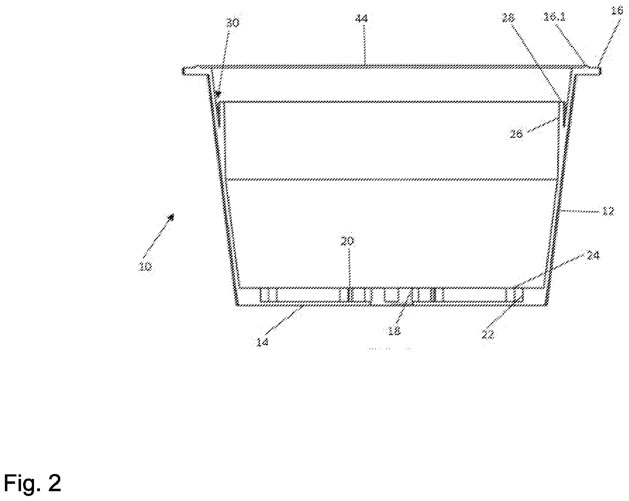

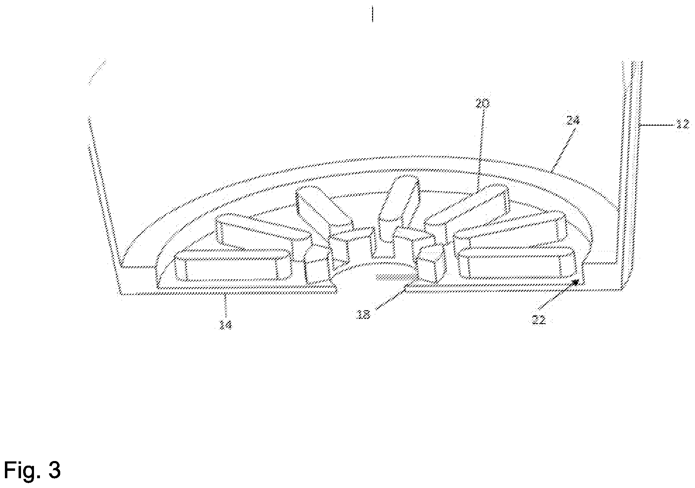

The capsule body 10 illustrated in Figures 1 to 3 comprises a frustoconical side wall 12 and a base wall 14. A flange 16 encircles the wider end of the capsule body and has a projecting circumferential rib 16.1. The base wall 14 has a central hole 18 in it and radially extending ribs 20 standing proud of its top surface. There is a step 22 where the side wall 12 joins the base wall 14, this providing a surface 24 which faces the open end of the capsule body 10.

An internal ring 26 is moulded integrally with the wall 12. The ring 26 provides a circumferentially extending surface 28 the function of which will be described below. There is a circumferentially extending vee-shaped groove 30 between the wall 12 and the cylindrical ring 26.

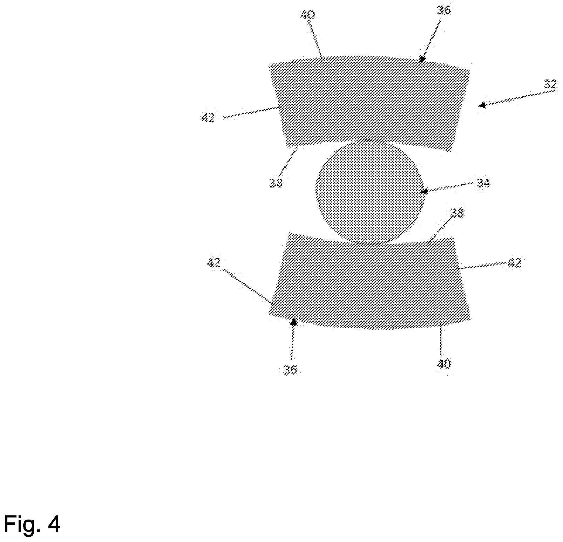

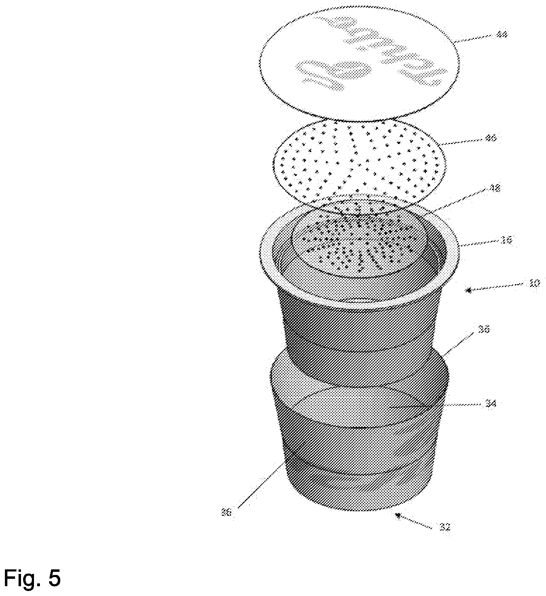

The label 32 shown in Figure 4 comprises a disc 34 the diameter of which equal the diameter of the base wall 14, and two arcuate sections 36 which together, when manipulated to the form shown in Figure 5, replicate the outside shape of the capsule body 10. The sections 36 are joined to the disc 34 at diametrically opposed locations of the disc 34. The label 32 is of laminated construction and comprises aluminium foil laminated to a film of synthetic plastics material. Each arcuate section 36 comprises a curved inner edge 38, the centre of which is joined to the disc 34, and a curved outer edge 40 parallel to the inner edge. Diverging side edges 42 join the ends of the curving edges of each section 36.

The label 32 and the body 10 are united in the mould by the technique known as in-mould labelling. The label 32 is inserted into the mould and, as it is inserted, the sections 36 are folded up about their connections to the disc 34 and manipulated to curved form with the edges 38 of one section 36 abutting the edges 38 of the other section 36 whereby the label takes on a frusto-conical shape.

The layer of synthetic plastics material is moulded onto the inside of the label 32. When synthetic plastics material is injected into the mould, it unites with the label's layer of synthetic plastics material, firmly bonding the label to the injection moulded body of the capsule.

The label 32 seals the hole 18. The wider end of the body 10 is closed by a foil disc 44 (Figure 5) heat sealed or adhered to the flange 16. The charge of the substance from which the beverage is to be extracted is between upper and lower filter discs which are shown at 46 and 48. The disc 46 is secured to the surface 28 of the ring 26 and the disc 48 to the surface 24.

Figure 6a depicts a capsule with a substantially flat base wall and an inwardly protruding centre element 50 at a radial centre line Y. This type of capsule is compatible with a so called Tchibo^{®} capsule platform currently available in the market. The capsule is provided with the one piece and/or integrally formed label 32 covering the side wall 12 and the base wall 14 according to the invention. Figure 6b depicts the shape in flat state of the label 32, comprising disk 34 and two sections 36, corresponding to the capsule depicted in figure 6a.

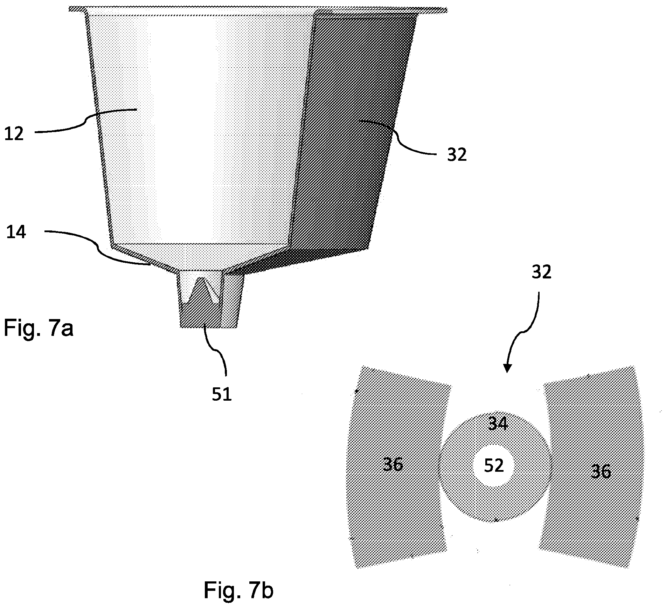

Figure 7a depicts a capsule with an outwardly protruding base wall 14, and an outwardly protruding spigot 51. This type of capsule is compatible with a so-called Dolce Gusto ^{®} capsule platform currently available in the market. The capsule is provided with the in-moulded label 32 covering the side wall 12 and the base wall 14 according to the invention. The outside surface of the spigot 51 is not covered with the label 32. Figure 7b depicts the shape in flat state of the label 32 corresponding to the capsule depicted in figure 7b. Here it can clearly be seen that the label comprises a disk 34 provided with a hole 52, and two sections 36.

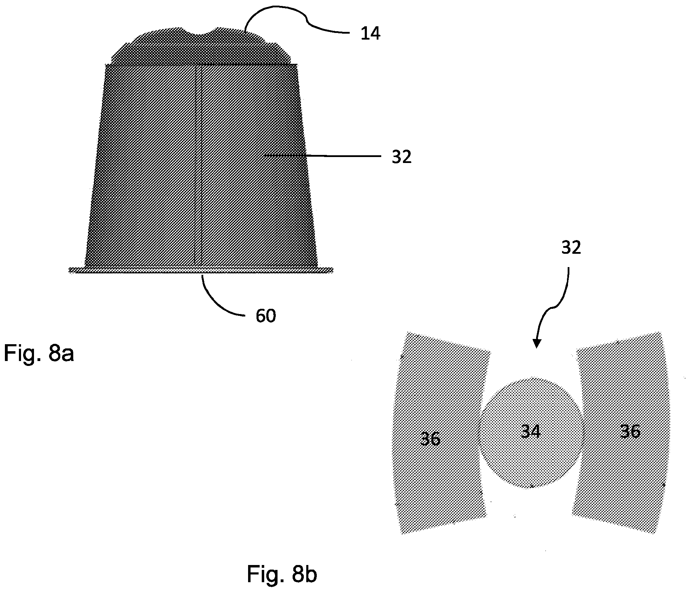

Figure 8a depicts a capsule with an outwardly protruding base wall 14. This type of capsule is compatible with a so-called Nespresso ^{®} capsule platform currently available in the market. The capsule is provided with the in-moulded label 32 covering the side wall and the base wall 14 (here depicted at the top of the figure) according to the invention. It should be noted that an outflow side 60 of this capsule is not covered by the in-moulded label, but by means of a distinctive foil disc sealed to a flange of the capsule body. Figure 8b depicts the shape in flat state of the label 32 corresponding to the capsule depicted in figure 8a.

The invention is further directed to a method of manufacturing a capsule, in particular the in-mould labelling of the capsule embodiments described above. In the following, those steps from the method that relate to the production of the label 32 and capsule body 10 will be described in detail. Other steps for the production of a finished and filled capsule will only be shortly described, or not described at all.

The label 32 as described above, is first punched out of a sheet of foil material. The originally flat label is then folded and manipulated to a shape wherein the disc 34 can cover at least a part of the base wall 14 and the sections 36 can cover at least a part of the side wall 12.

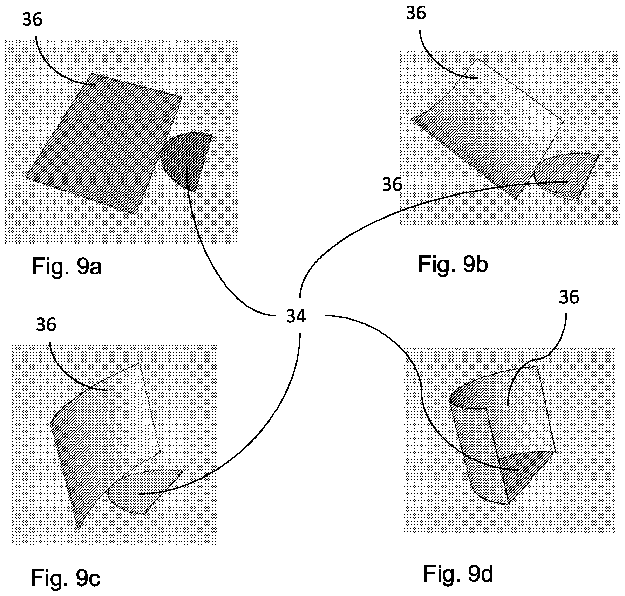

Figure 9a-d shows the folding process of the label 32 in more detail, wherein only half of the label is shown. During this process, the label is folded from an initial flat state (see figure 9a) to a three-dimensional state corresponding to the shape of the capsule body (see figure 9d). In figure 9a, both the disc 34 and the section 36 are coplanar. This corresponds to the state the label 32 is in after it has been formed out of the sheet of foil. Figure 9b depicts the label 32 wherein the section 36 has been folded slightly upwards relative to the disc 34 along its integrally joined connection with the disc 34.

This folding process could be performed around an intermediary element core (not shown here) which corresponds to the intended shape of the capsule body. This intermediary element then may have a positive shape with respect to a hollow injection moulding cavity (not shown). During this, the label 32 can be electrostatically charged and thereby removably connected to a metallic surface of the intermediary element. After a mechanical transfer from the intermediary element into the moulding cavity, the mould can be closed. During closing of the moulding cavity, an injection moulding core gets to protrude into the moulding cavity and comes to lie in front of or against the folded and manipulated into the curved form label 32 in the cavity. The label 32 may subsequently or simultaneously be fixed against the moulding cavity using electrostatic charging. During a subsequent injection step, a plastic resin that is to form the capsule body 10 may be injected into the mould from a side of the mould comprising the core. In such an injection moulding step, the label 32 will be formed on and adhere against an outside of the capsule body 10.

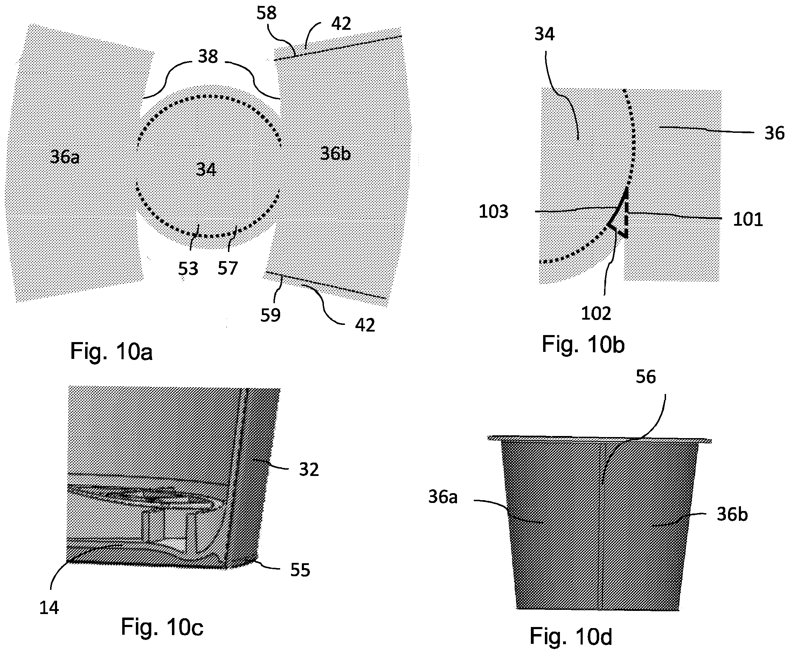

Figure 10a shows an embodiment of the label 32 wherein the diameter of the disc 34 is dimensioned larger than the base wall 14. The diameter of the base wall 14 of the to be moulded capsule body 10 is indicated with dotted line 53. Figure 10a further shows that the sections 36 join to the disc 34 at an offset from its peripheral edge, along dotted line 53.

Another aspect of the label visible in figure 10a is that the total length of the sections 36 in a longitudinal direction is larger than a circumference of the capsule body. The total excess length of the sections 36 compared to the circumference of the capsule body 10 is depicted with areas 58 and 59, between side edges 42 and dotted line 60 and 61 respectively. Similarly, area 57 between the peripheral edge of the disc 34 and line 53 depicts the surplus area of the disc 34 with respect to the base wall 14 of the capsule body 10.

Figure 10b shows a detailed view of figure 10a, wherein there is zoomed in on the integral joint between the disc 34 and the section 36. To aid the label folding process at the location of this joint, an additional incision 101, 102 or 103 can be provided during punching of the label 32.

Figure 10c and 10d show the result of folding and manipulating the label from figure 10a to the curved form of a frusto-conical capsule body 10. The peripheral edge of the disc 34 has come to extend beyond an inner edge 38 of the one or more sections 36. Due to the excess material of the disc 34, between dotted line 53 and the periphery of the disc, a first overlap 55 is created. Due to the excess material of the sections 36, between side edges 42 and dotted lines 54, a second overlap 56 is created. It should be noted that overlap 55 and 56 are mechanical overlaps, meaning that the surplus area 57 of the disc 34 is physically in contact with the sections 36 at overlap 55. In figure 10d, the surplus areas 58 and 59 of a first section 36a is in contact with a second section 36b at area 56. Both overlaps 55 and 56 are important for the barrier properties of the label material, as it prevents gas and/or water vapour molecules to transfer from an outside to an inside of the capsule. In figure 10c and 10d, both the overlaps 55 and 56 are approximately 1.5 mm. In other embodiments, the overlap may be anything between 0.1 and 2.5 mm. Alternatively, the edges of the disc 34 and/or sections 36 may also abut against each other.

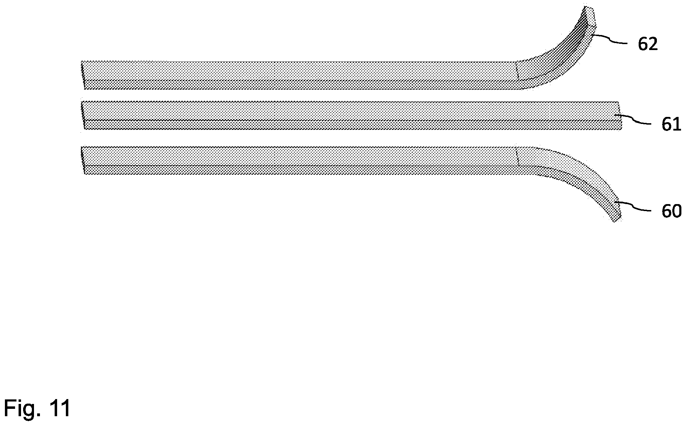

The label 32 is a laminated construction that comprises an oxygen barrier, in particular an aluminium foil, laminated to a film of synthetic plastics material. Figure 11 shows a cross sectional view of an embodiment of the label material having a layer of 30 µm Ethylene-vinylalcohol (EVOH) 61 laminated to a film of 12 µm Polyethylene-terephthalate (PET) 60 and a layer of 12 µm Aluminium 62. Here, the PET layer bonds to the capsule body 10 and the aluminium layer 62 faces towards an outside of the capsule. The film of synthetic plastic material preferably comprises a material that is adherable to the material whereupon it lies at the overlap 57 or 58, under the conditions in the mould during processing. In an embodiment that combines the feature of the overlap 55 or 56 with a three layered label material, such as in figures 10 and 11, a top layer is preferably chosen such that it is adherable to a bottom layer. Due to a heat and pressure in the mould, the layer of synthetic plastic material of the label reaches conditions wherein it bonds chemically to the material it lies in contact with. Besides bonding to the injected plastic material, the edges of the label at the overlaps 55 and 56 then are connected with each other by means of the top and bottom layers of synthetic plastics material of the label 32 themselves.

It should be noted that besides the capsule body as illustrated in figures 1 to 10, various other capsule bodies could be provided. In an embodiment, the capsule could be cylindrical rather than frusto-conical. In yet another embodiment, the capsule could be constructed without the step 22. Also, the integrally moulded ribs 20 and/or internal ring 26 could be omitted or provided in another shape or form. Without being exhaustive, the capsule could be constructed without the flange 16 or and/or circumferential rib 16.1.

Furthermore, the label 32 could comprise any number of sections 36 joined to the disc 34. The sections 36 could have a rectangular shape so that they can be manipulated to a cylindrical form, or another shape corresponding to a certain shape of the capsule body 10. The inner 38 and outer edges 40 of each section 36 may not be parallel. The sections 36 may also have differing shapes relative to on another. Furthermore, the sections 36 could be joined to the disc 34 at other locations than at a centre of their inner edge 38.

It should be noted that in certain embodiments of the method, the folding step depicted in figure 9b and 9c could be executed parallel with a step of manipulating the label 32 to curved of which the result is depicted in figure 9d.

Furthermore, the incisions 101, 102 and 103 could be made otherwise than depicted in figure 10b, and/or combined in different ways.

Instead of using an intermediary element for forming the label around, the injection moulding core itself could serve this purpose. The label could then alternatively lie against the moulding core during injection, so that in an arrangement wherein plastic resin is injected into the mould from the side of the cavity, the label comes to lie against an inside of the capsule body. Alternatively, the plastic resin could be injected from a side of the core. In an embodiment, the label may be held releasably to a surface of the injection mould by using vacuum pressure.

Besides aluminium-containing materials such as aluminium and aluminium oxide (AlOx), the oxygen barrier may be comprise any gas-tight material such as for instance ethylene vinyl alcohol (EVOH), silicium oxide (SiOx), Polyvinylalcohol (PVOH), metalized plastics, or a combination thereof.

The materials listed above can be laminated in combination with plastic films made of polypropylene (PP), polyethylene (PE), polyethylene terephtalate (PET), polyethylene naphthalate (PEN), polylactic acid (PLA), or a combination thereof, to create laminated barrier films. Laminated barrier films such as for instance EVOH/PP, PET/SiOx/PP, PET/AIOx/PP, PET/Aluminium/PE may be applied. Also the order in layers and/or the layer thicknesses may vary.

## Claims

1. A method of manufacturing a capsule for containing a substance from which a beverage can be produced, the method comprising:
- using an in-mould labelling technique to unite a label (32) with a capsule body (10) of synthetic plastics material so that the label (32) covers at least part of a base wall (14) of the capsule body (10) and at least part of a side wall (12) of the capsule body (10),
wherein the label (32) comprises a disc (34) and one or more sections (36) joined to a periphery of the disc,
**characterized in that**,
the label (32) is inserted into a mould and the one or more sections (36) are folded up relative to the disc (34) and manipulated to a curved form of the side wall (12), such that the disc (34) covers at least said part of the base wall (14) and the one or more sections (36) cover at least said part of the side wall (12),
wherein the layer of synthetic plastics material is moulded onto the label (32) bonding the label (32) to the injection moulded capsule body (10), and
wherein the disc (34) is dimensioned larger than the base wall (14), and wherein a peripheral edge of the disc (34) is folded up and manipulated to the curved form of the side wall (12) such that the peripheral edge of the disc (34) comes to extend beyond an inner edge of the one or more sections (36) creating an overlap between them.

2. Method according to claim 1, wherein the one or more sections (36) joined to the periphery of the disc (34) have a plurality of sections (36) at diametrically opposed locations.

3. Method according to claim 1 or 2, wherein each of the one or more sections (36) has an inner edge a centre of which is joined to the disc (34).

4. Method according to one of the preceding claims, wherein the label (32) is provided with one or more incisions (101, 102, 103) extending inwardly from the peripheral edge of the disc (34) at a location where the one or more sections (36) join to the periphery of the disc (34).

5. Method according to one of the preceding claims, wherein the overlap lies between 0.1 - 2.5 mm.

6. Method according to one of the preceding claims, wherein the one or more sections (36) are dimensioned larger than the side wall (12), and wherein the one or more sections (36) are folded up and manipulated to the curved form of the side wall (12) such that adjacent side edges of the one or more sections (36) come to extend beyond each other creating an overlap between them, and/or
wherein the label (32) is a laminated construction that comprises an oxygen barrier, in particular an aluminium foil, laminated to a film of synthetic plastics material.

7. Method according to claim 6, wherein during the moulding of the layer of synthetic plastics material onto the label (32), bonding the label to the injection moulded capsule body (10), furthermore a connecting with each other of the respective edges at the overlap takes place by means of the film of synthetic plastics material of the label (32) itself.

8. A capsule for containing a substance from which a beverage can be produced, comprising:
- a capsule body (10) of synthetic plastics material that comprises:
∘ a base wall (14);
∘ a side wall (12),
- a label (32) covering at least a part of the base wall (14) and at least a part of the side wall (12),
wherein the label (14) and capsule body (10) have been united using an in-mould labelling technique,
wherein the label (32) comprises:
- a disc (34); and
- one or more sections (36) joined to a periphery of the disc (34),
**characterized in that**,
the one or more sections (36) have been folded up relative to the disc (34) and manipulated to a curved form of the side wall (12), such that the disc (34) covers at least said part of the base wall (14) and the one or more sections (36) cover at least said part of the side wall (12), and
wherein the disc (34) is dimensioned larger than the base wall (14), and wherein a peripheral edge of the disc (34) has been folded up and manipulated to the curved form of the side wall (12) such that the peripheral edge of the disc (34) has come to extend beyond an inner edge of the one or more sections (36) creating an overlap (55) between them.

9. Capsule according to claim 8, wherein the one or more sections (36) joined to the periphery of the disc (34) have a plurality of sections (36) at diametrically opposed locations.

10. Capsule according to any of the claims 8-9, wherein each of the one or more sections (36) has an inner edge a centre of which is joined to the disc (34).

11. Capsule according to any of the claims 8-10, wherein the label (32) comprises one or more incisions (101, 102, 103) extending inwardly from the peripheral edge of the disc (34) at a location where the one or more sections (36) join to the periphery of the disc (34).

12. Capsule according to any of the claims 8-11, wherein the overlap (55) lies between 0.1 - 2.5 mm.

13. Capsule according to any of the claims 8-12, wherein the one or more sections (36) are dimensioned larger than the side wall (12), and wherein the one or more sections (36) have been folded up and manipulated to the curved form of the side wall (12) such that adjacent side edges of the one or more sections (36) have come to extend beyond each other creating an overlap (56) between them, and/or
wherein the label (32) is a laminated construction that comprises an oxygen barrier, in particular an aluminium foil, laminated to a film of synthetic plastics material.

## Patentansprüche

1. Verfahren zur Herstellung einer Kapsel zum Enthalten eines Stoffs aus dem ein Getränk hergestellt werden kann, wobei das Verfahren umfasst:
Verwenden eines In-Mould-Etikettierverfahrens zum Vereinigen eines Etiketts (32) mit einem Kapselkörper (10) aus synthetischem Kunststoffmaterial, so dass das Etikett (32) wenigstens einen Teil einer Bodenwand (14) des Kapselkörpers (10) und wenigstens einen Teil einer Seitenwand (12) des Kapselkörpers (10) bedeckt,
wobei das Etikett (32) eine Scheibe (34) und einen oder mehrere Abschnitte (36), die mit einem Rand der Scheibe verbunden sind, umfasst,
**dadurch gekennzeichnet, dass**
das Etikett (32) in ein Formwerkzeug eingeführt wird und der eine oder die mehreren Abschnitte (36) von der Scheibe (34) nach oben gefaltet und an eine gekrümmte Form der Seitenwand (12) manipuliert werden, so dass die Scheibe (34) wenigstens den Teil der Bodenwand (14) bedeckt und der eine oder die mehreren Abschnitte (36) wenigstens den Teil der Seitenwand (12) bedecken, wobei die Schicht von synthetischem Kunststoffmaterial auf das Etikett (32) geformt wird, um das Etikett (32) an den spritzgegossenen Kapselkörper (10) zu binden, und
wobei die Scheibe (34) größer als die Bodenwand (14) dimensioniert ist und wobei eine Randkante der Scheibe (34) nach oben gefaltet und an die gekrümmte Form der Seitenwand (12) manipuliert wird, so dass die Randkante der Scheibe (34) über eine Innenkante des einen oder der mehreren Abschnitte (36) hinaus verläuft, um eine Überlappung dazwischen zu erzeugen.

2. Verfahren gemäß Anspruch 1, wobei der eine oder die mehreren mit dem Rand der Scheibe (34) verbundenen Abschnitte (36) eine Vielzahl von Abschnitten (36) an diametral gegenüberliegenden Positionen aufweisen.

3. Verfahren gemäß Anspruch 1 oder 2, wobei jeder des einen oder der mehreren Abschnitte (36) eine Innenkante aufweist, an deren Mitte er mit der Scheibe (34) verbunden ist.

4. Verfahren gemäß einem der vorstehenden Ansprüche, wobei das Etikett (32) mit einem oder mehreren Einschnitten (101, 102, 103) versehen ist, die von der Randkante der Scheibe (34) an einer Position, an der der eine oder die mehreren Abschnitte (36) mit dem Rand der Scheibe (34) verbunden ist, nach innen verlaufen.

5. Verfahren gemäß einem der vorstehenden Ansprüche, wobei die Überlappung zwischen 0,1 und 2,5 mm beträgt.

6. Verfahren gemäß einem der vorstehenden Ansprüche, wobei der eine oder die mehreren Abschnitte (36) größer als die Seitenwand (12) dimensioniert sind und wobei der eine oder die mehreren Abschnitte (36) nach oben gefaltet und an die gekrümmte Form der Seitenwand (12) manipuliert werden, so dass benachbarte Seitenkanten des einen oder der mehreren Abschnitte (36) über einander hinaus verlaufen, um eine Überlappung dazwischen zu erzeugen, und/oder
wobei das Etikett (32) einen laminierten Aufbau aufweist, der eine Sauerstoffbarriere umfasst, insbesondere eine Aluminiumfolie, die an einen Film aus synthetischem Kunststoffmaterial laminiert ist.

7. Verfahren gemäß Anspruch 6, wobei während des Formens der Schicht aus synthetischem Kunststoffmaterial auf das Etikett (32), das das Etikett an den spritzgegossenen Kapselkörper (10) bindet, ferner Verbinden der entsprechenden Kanten an den Überlappungen miteinander mithilfe des Films von synthetischem Kunststoffmaterial des Etiketts (32) selbst erfolgt.

8. Kapsel zum Enthalten eines Stoffs aus dem ein Getränk hergestellt werden kann, umfassend:
- einen Kapselkörper (10) aus synthetischem Kunststoffmaterial, der umfasst:
o eine Bodenwand (14);
o eine Seitenwand (12),
- ein Etikett (32), das wenigstens einen Teil der Bodenwand (14) und wenigstens einen Teil der Seitenwand (12) bedeckt,
wobei das Etikett (14) und der Kapselkörper (10) unter Verwendung eines In-Mould-Etikettierverfahrens vereinigt worden sind,
wobei das Etikett (32) umfasst:
- eine Scheibe (34); und
- einen oder mehrere Abschnitte (36), die mit einem Rand der Scheibe (34) verbunden sind,
**dadurch gekennzeichnet, dass**
der eine oder die mehreren Abschnitte (36) von der Scheibe (34) nach oben gefaltet und an eine gekrümmte Form der Seitenwand (12) manipuliert worden sind, so dass die Scheibe (34) wenigstens den Teil der Bodenwand (14) bedeckt und der eine oder die mehreren Abschnitte (36) wenigstens den Teil der Seitenwand (12) bedecken, und
wobei die Scheibe (34) größer als die Bodenwand (14) dimensioniert ist und wobei eine Randkante der Scheibe (34) nach oben gefaltet und an die gekrümmte Form der Seitenwand (12) manipuliert worden ist, so dass die Randkante der Scheibe (34) über eine Innenkante des einen oder der mehreren Abschnitte (36) hinaus verläuft, um eine Überlappung dazwischen zu erzeugen.

9. Kapsel gemäß Anspruch 8, wobei der eine oder die mehreren mit dem Rand der Scheibe (34) verbundenen Abschnitte (36) eine Vielzahl von Abschnitten (36) an diametral gegenüberliegenden Positionen aufweisen.

10. Kapsel gemäß einem der Ansprüche 8-9, wobei jeder des einen oder der mehreren Abschnitte (36) eine Innenkante aufweist, an deren Mitte er mit der Scheibe (34) verbunden ist.

11. Kapsel gemäß einem der Ansprüche 8-10, wobei das Etikett (32) einen oder mehrere Einschnitten (101, 102, 103) umfasst, die von der Randkante der Scheibe (34) an einer Position, an der der eine oder die mehreren Abschnitte (36) mit dem Rand der Scheibe (34) verbunden sind, nach innen verlaufen.

12. Kapsel gemäß einem der Ansprüche 8-11, wobei die Überlappung (55) zwischen 0,1 und 2,5 mm beträgt.

13. Kapsel gemäß einem der Ansprüche 8-12, wobei der eine oder die mehreren Abschnitte (36) größer als die Seitenwand (12) dimensioniert sind und wobei der eine oder die mehreren Abschnitte (36) nach oben gefaltet und an die gekrümmte Form der Seitenwand (12) manipuliert worden sind, so dass benachbarte Seitenkanten des einen oder der mehreren Abschnitte (36) über einander hinaus verlaufen, um eine Überlappung dazwischen zu erzeugen, und/oder
wobei das Etikett (32) einen laminierten Aufbau aufweist, der eine Sauerstoffbarriere umfasst, insbesondere eine Aluminiumfolie, die an einen Film aus synthetischem Kunststoffmaterial laminiert ist.

## Revendications

1. Procédé de fabrication d'une capsule destinée à contenir une substance à partir de laquelle une boisson peut être produite, le procédé comprenant :
- l'utilisation d'une technique d'étiquetage dans le moule pour unir une étiquette (32) à un corps de capsule (10) en matière plastique synthétique de sorte que l'étiquette (32) recouvre au moins une partie d'une paroi de base (14) du corps de capsule (10) et au moins une partie d'une paroi latérale (12) du corps de capsule (10),
l'étiquette (32) comprenant un disque (34) et une ou plusieurs sections (36) reliées à une périphérie du disque,
**caractérisé en ce que,**
l'étiquette (32) est insérée dans un moule et la ou les sections (36) sont repliées par rapport au disque (34) et manipulées pour obtenir une forme incurvée de la paroi latérale (12), de sorte que le disque (34) recouvre au moins ladite partie de la paroi de base (14) et que la ou les sections (36) recouvrent au moins ladite partie de la paroi latérale (12),
la couche de matière plastique synthétique étant moulée sur l'étiquette (32), liant l'étiquette (32) au corps de la capsule moulé par injection (10), et
le disque (34) étant plus grand que la paroi de base (14), et un bord périphérique du disque (34) étant replié et manipulé pour obtenir la forme incurvée de la paroi latérale (12) de sorte que le bord périphérique du disque (34) vient à s'étendre au-delà d'un bord intérieur de la ou des sections (36), créant ainsi un chevauchement entre elles.

2. Procédé selon la revendication 1, la ou les sections (36) jointes à la périphérie du disque (34) présentant une pluralité de sections (36) à des emplacements diamétralement opposés.

3. Procédé selon la revendication 1 ou 2, chacune de la ou des sections (36) ayant un bord intérieur dont un centre est joint au disque (34).

4. Procédé selon l'une quelconque des revendications précédentes, l'étiquette (32) étant pourvue d'une ou plusieurs incisions (101, 102, 103) s'étendant vers l'intérieur à partir du bord périphérique du disque (34) à un emplacement où la ou les sections (36) se joignent à la périphérie du disque (34).

5. Procédé selon l'une quelconque des revendications précédentes, le chevauchement se situant entre 0,1 et 2,5 mm.

6. Procédé selon l'une quelconque des revendications précédentes, la ou les sections (36) étant dimensionnées plus grandes que la paroi latérale (12), et la ou les sections (36) étant repliées et manipulées pour obtenir la forme incurvée de la paroi latérale (12) de sorte que des bords latéraux adjacents de la ou des sections (36) viennent à s'étendre au-delà les uns des autres en créant un chevauchement entre eux, et/ou l'étiquette (32) étant une construction stratifiée qui comprend une barrière à oxygène, en particulier une feuille d'aluminium, stratifiée sur un film de matière plastique synthétique.

7. Procédé selon la revendication 6, lors du moulage de la couche de matière plastique synthétique sur l'étiquette (32), liant l'étiquette au corps de capsule moulé par injection (10), une liaison l'une avec l'autre des bords respectifs au niveau du chevauchement ayant en outre lieu au moyen du film de matière plastique synthétique de l'étiquette (32) elle-même.

8. Capsule destinée à contenir une substance à partir de laquelle une boisson peut être produite, comprenant :
- un corps de capsule (10) en matière plastique synthétique qui comprend :
∘ une paroi de base (14) ;
∘ une paroi latérale (12),
- une étiquette (32) recouvrant au moins une partie de la paroi de base (14) et au moins une partie de la paroi latérale (12),
l'étiquette (14) et le corps de la capsule (10) ayant été unis à l'aide d'une technique d'étiquetage dans le moule,
l'étiquette (32) comprenant :
- un disque (34) ; et
- une ou plusieurs sections (36) reliées à une périphérie du disque (34),
**caractérisées en ce que,**
la ou les sections (36) ont été repliées par rapport au disque (34) et manipulées pour obtenir une forme incurvée de la paroi latérale (12), de sorte que le disque (34) recouvre au moins ladite partie de la paroi de base (14) et que la ou les sections (36) recouvrent au moins ladite partie de la paroi latérale (12), et
le disque (34) étant dimensionné plus grand que la paroi de base (14), et un bord périphérique du disque (34) ayant été replié et manipulé pour obtenir la forme incurvée de la paroi latérale (12), de sorte que le bord périphérique du disque (34) est venu s'étendre au-delà d'un bord intérieur de la ou des sections (36), créant un chevauchement (55) entre elles.

9. Capsule selon la revendication 8, la ou les sections (36) reliées à la périphérie du disque (34) comportant une pluralité de sections (36) à des emplacements diamétralement opposés.

10. Capsule selon l'une quelconque des revendications 8 et 9, chacune de la ou des sections (36) ayant un bord intérieur dont le centre est relié au disque (34).

11. Capsule selon l'une quelconque des revendications 8 à 10, l'étiquette (32) comprenant une ou plusieurs incisions (101, 102, 103) s'étendant vers l'intérieur à partir du bord périphérique du disque (34) à un emplacement où la ou les sections (36) se joignent à la périphérie du disque (34).

12. Capsule selon l'une quelconque des revendications 8 à 11, le chevauchement (55) étant compris entre 0,1 et 2,5 mm.

13. Capsule selon l'une quelconque des revendications 8 à 12, la ou les sections (36) étant plus grandes que la paroi latérale (12), et la ou les sections (36) ayant été repliées et manipulées pour obtenir la forme incurvée de la paroi latérale (12) de telle sorte que des bords latéraux adjacents de la ou des sections (36) sont venus s'étendre les uns au-delà des autres, créant un chevauchement (56) entre eux, et/ou
l'étiquette (32) étant une construction stratifiée qui comprend une barrière à oxygène, en particulier une feuille d'aluminium, stratifiée sur un film en matière plastique synthétique.
